# EUROPEAN PATENT SPECIFICATION

(11) **EP 2 078 891 B1**
(45) Date of publication and mention of the grant of the patent: **13.06.2018**
(21) Application number: 09150161.9
(22) Date of filing: 07.01.2009
(51) Int. Cl.: F16K 31/56, F16K 31/00, F16K 31/02

(54) **Electrically operated quick-closing valve device**
Elektrisch betriebene schnell schließende Ventilvorrichtung
Dispositif à soupape à fermeture rapide à commande électrique

(30) Priority: 11.01.2008 IT TO20080023
(43) Date of publication of application: 15.07.2009
(73) Proprietor: ELBI International S.p.A., 10129 Torino (IT)
(72) Inventor: Farano, Michele, I-10137 Torino (IT); Musso, Marco, I-10082 Cuorgné (TO) (IT)
(74) Representative: Quinterno, Giuseppe

(56) References cited:
- WO-A1-2006/069835
- JP-A- S60 188 676
- US-A- 3 798 894
- US-B1- 7 260 932

## Description

The present invention relates to an electrically operated valve device. An electrically operated valve device comprising a supporting body, a shutter, a rotating member, a resilient return member, first opening actuator means, second closing actuator means and retaining means is disclosed in US-B-7 260 932. Similar devices are disclosed in US-A-3798 894 and JP-A-60-188676.
One object of the present invention is to provide a reliably operating valve device which is simple and economical to produce, and in which the valve seat is quickly closed by electrical actuation.
This and other objects are achieved according to the present invention by means of a valve device having the features defined in independent claim 1. Preferred embodiments of the valve device are defined in the dependent claims. Further characteristics and advantages of the invention will be made clear by the following detailed description, provided purely as a non-limiting example, with reference to the appended drawings, in which:
Figure 1 is a view in elevation of an example of embodiment of a valve device according to the invention, shown without its front wall;

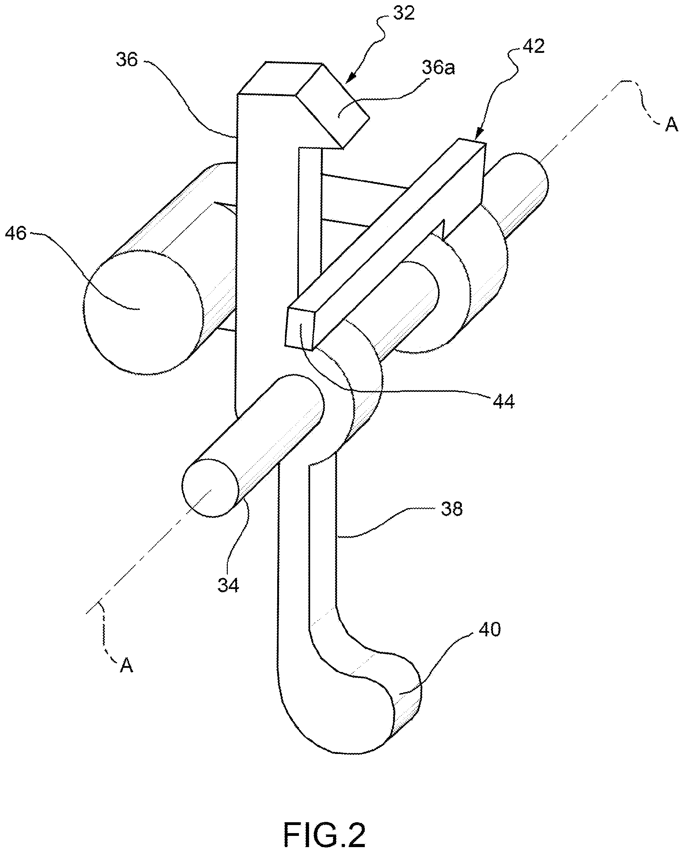

Figure 2 is an enlarged perspective view of the retaining mechanism of the valve device; and
Figures 3 to 5 are schematic illustrations of the sequence in which the retaining means are coupled to a sliding member of the valve device.
With reference to Figure 1, this shows an electrically operated valve device which is indicated as a whole by the reference numeral 10.
The valve device 10 comprises a supporting body 12 which has an upper portion 12a and a lower portion 12b.
The upper portion 12a includes an inlet passage 14 and an outlet passage (not shown), between which is interposed a chamber (not shown) in which a valve seat (not shown) is formed, this seat being designed to be blocked by a shutter 16, only the lower end of which is visible.

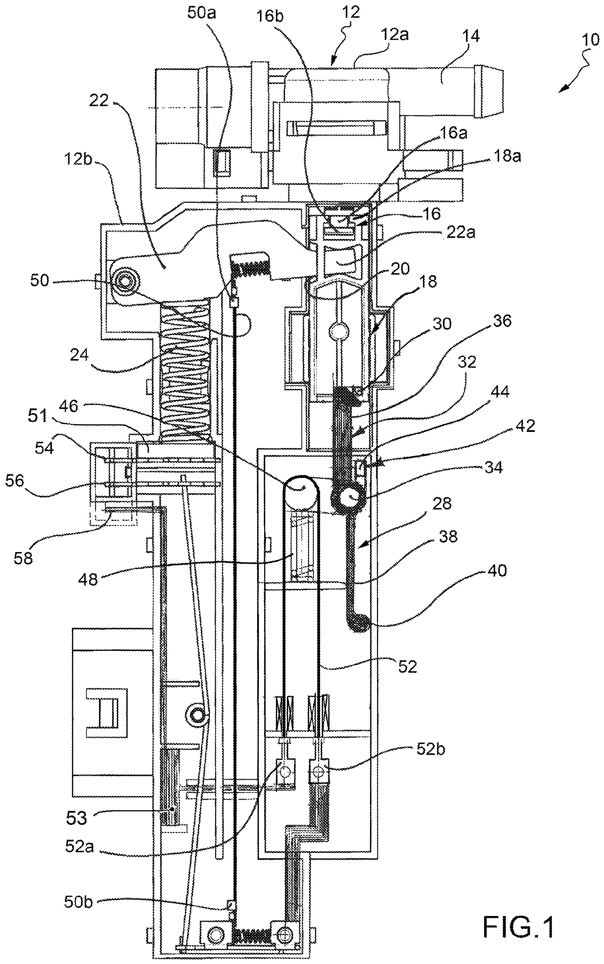

In the present description, the valve device 10 is described as a shut-off valve. However, it will be evident to those skilled in the art that the configuration of the valve device 10 can also be adapted for operation as a selector valve, a diverter valve, or another type.
As shown in Figure 1, the shutter 16 projects below the upper portion 12a of the supporting body 12 and faces into the lower portion 12b. In this drawing, the shutter 16 is in a closing position in which it blocks the valve seat.
The valve device 10 comprises a sliding member 18 which is translatably mounted on the lower portion 12b of the supporting body 12, and which is fixed mechanically to the shutter 16 with respect to translation. In Figure 1, the sliding member 18 is shown in a closing condition which corresponds to the closing position of the shutter 16.
In this condition, it should be noted that the shutter 16 has an intermediate narrower portion 16a and an enlarged terminal portion 16b, while the sliding member 18 comprises upper hooked portions 18a which surround the narrower portion 16a of the shutter 16. In the opening position of the shutter 16 and in the corresponding opening condition of the sliding member 18 (Figure 1), it should be noted that there is a slight clearance in the axial direction between the hooked portions 18a and the enlarged end 16b, allowing the sliding member 18 to travel idly through a short distance before it bears on the enlarged end 16b of the shutter 16 and pushes it downwards.
The sliding member 18 has a general structure in the form of a hollow parallelepipedal frame which has a lateral aperture 20 for accommodating a lever 22 mounted rotatably in the lower portion 12b of the supporting body 12.
The rotatable lever 22 has one end 22a housed in the lateral aperture 20 and is pushed by a resilient return member which pushes this rotatable lever 22 upwards, thus tending to retain the sliding member 18 in its closing condition shown in Figure 1.
The resilient return member is preferably a compressively pre-loaded helical spring 24 interposed between the inner walls of the portion 12b of the supporting body 12 and the lever 22 in a proximal position close to the rotation axis of the lever.

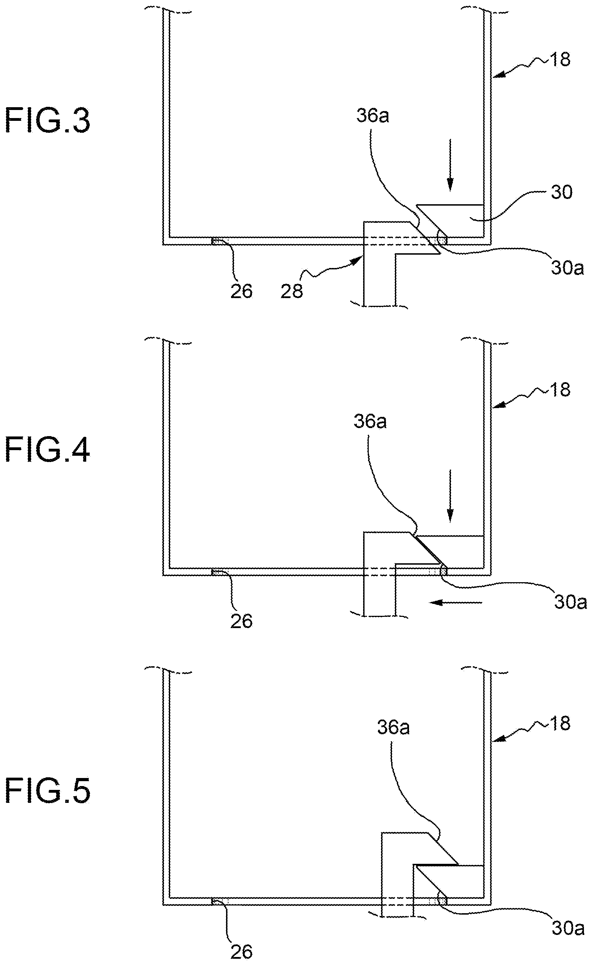

As shown also in Figures 3 to 5, the sliding member 18 has a lower aperture 26 of substantially rectangular shape which interacts with a retaining mechanism indicated as a whole by the number 28. On one side of the lower aperture 26, the sliding member 18 also has a first inclined profile 30a of a catch 30.

The retaining mechanism 28 includes a locking element 32 which is rotatable with respect to the lower portion 12b of the supporting body 12 about an axis of rotation A-A. Preferably, the locking element is a rocker lever 32 pivoted about a pin 34 which is mounted inside the lower portion 12b of the supporting body 12 and whose longitudinal axis coincides with the axis of rotation A-A.

The locking element or rocker lever 32 has a first arm 36 which has a second inclined profile 36a, with a shape complementary to that of the first inclined profile 30a, at its upper end. The locking rocker 32 also has a second lower arm 38 which advantageously has a rounded tail 40 at its lower end, this tail bearing resiliently on the inner walls of the lower portion 12b of the supporting body 12. In Figure 1, the locking rocker 32 is shown in an angular fastening position in which it is placed in order to couple itself releasably to the sliding member 18.

In the angular fastening position, it can be seen that the locking rocker 32 is constructed and mounted in the casing 12 in such a way as to oppose its rotation about the axis A-A which would move its first arm 36 away from the catch 30 of the sliding member 18. The rounded tail 40 has the function of resiliently retaining the locking rocker 32 (and particularly its first arm 36) in the aforesaid angular fastening position.

The retaining means 28 also comprise a release element 42 which is rotatable with respect to the lower portion 12b of the supporting body 12. The release element 42 advantageously, but not necessarily, rotates about the same axis of rotation A-A as that of the locking rocker 32, since it is also pivoted for rotation about the pin 34. In other variants (not shown), it is possible to use a first pin about which the locking rocker 32 can rotate, and a second pin about which the release element 42 can rotate. In such cases, the rotation of the locking rocker 32 and the release element 42 would take place about two different axes of rotation, which could advantageously be parallel to each other.

The release element 42 has a transversely elongated shape, from which a projection 44 extends axially at one end. A pin 46 projects axially at the opposite end of the release element 42.

The axial projection 44 interacts with the first arm 36, while the axial pin 46 is pushed by an opposing resilient member 48 which tends to retain the release element in the angular position shown in Figure 1 and which bears on the inner walls of the lower part 12b of the supporting body 12.

The actuator devices which concur in the closing and opening of the valve device 10 will now be described.

The actuator devices advantageously comprise a first conducting shape memory wire 50 and a second conducting shape memory wire 52.

In the procedure described below, the first conducting shape memory wire 50 acts as the opening actuator for the valve device 10, while the second conducting shape memory wire 52 serves to close the device. It should be noted that the first actuating shape memory wire has a first end 50a connected mechanically to the rotatable lever 22, while its opposite lower end is fixed to the lower portion 12b of the supporting body 12. On the other end, the second conducting shape memory wire 52 has both of its ends 52a and 52b fixed to the lower portion 12b of the supporting body 12, and is wound over the axial pin 46.

The conducting shape memory wires 50 and 52 have the known property of reducing their length when an electric current is passed through them. They can therefore assume a first de-energized, or elongated, condition, in which no electric current flows through them, and a second energized, or contracted, condition, in which they are heated by an electric current flowing through them. After a predetermined period following their entry into the energized condition, these conducting wires 50 and 52 cool down and return progressively to their initial shape corresponding to their de-energized condition. Advantageously, two PTC resistors 51 and 53 are also housed in the lower portion 12b of the supporting body 12 and are connected upstream of the two conducting shape memory wires 50 and 52 respectively, to provide excess current protection.

In the present description, Figure 1 shows only the de-energized condition of both conducting shape memory wires 50 and 52, and their energized condition is not illustrated in the drawings.

The valve device 10 also comprises a first, a second and a third external contact 54, 56 and 58, which are mounted so that they project outwards from the lower portion 12b of the supporting body 12.

The first contact 54 is electrically connected to the first end 50a of the first conducting shape memory wire 50. The second contact 56 is electrically connected to the second end 50b of the first conducting shape memory wire 50 and to the second end 52b of the second conducting shape memory wire 52. The third contact 58 is electrically connected to the first end 52a of the second conducting shape memory wire 52.

As mentioned above, Figure 1 shows the valve device 10 with the shutter 16 in a closing position and the sliding member 18 in the corresponding closing condition.

The actuation of this valve device 10 for the purpose of its opening will now be described. A potential difference is initially applied by an external control device (not shown) between the first and the second external contacts 54 and 56. The first opening wire 50 therefore changes from the de-energized elongated condition (Figure 1) to an energized, or contracted, condition (not shown). The lever 22 is thus rotated downwards (in the clockwise direction with respect to Figure 1) against the action of the resilient return member 24, and simultaneously moves the sliding member 18 downwards. After an initial idle travel, the sliding member comes to bear with its hooked portions 18a against the enlarged portion 16b. The sliding member 18 then moves the shutter 16 from the closing position (Figure 1) to the opening position (not shown) of the valve seat.

At the same time, as shown in Figures 3 to 5 in particular, the lower catch 30 of the sliding member 18, which descends together with the sliding member 18, comes to bear on the upper end of the first arm 36. Consequently the interaction between the first and second inclined profiles 30a and 36a tends to push the first arm 36 of the locking element 32 away from its fastening position. However, owing to the resilient nature of the pressure exerted by the rounded tail 40 of the second arm 38 of the locking rocker 32, the passage of the first inclined profile 30a below the second inclined profile 36a causes the first arm 36 to be locked by engagement with the lower catch 30 of the sliding member 18.

Thus the sliding member 18 is coupled to the locking rocker 32. After the activation of the first conducting wire 50, this wire cools and returns to its elongated condition shown in Figure 1. In this condition, the resilient return member 24 pushes the lever 22, and therefore tends to return the group composed of the shutter 16 and the sliding member 18 to the closing position and the closing condition respectively. However, the coupling between the sliding member 18 and the locking rocker 32 prevents this movement.

The actuation of the valve device 10 for the purpose of its closing will now be described. Initially, the external control device applies a potential difference between the second and third external contacts 56 and 58, causing the second conducting wire 52 to change from the elongated condition to the contracted condition. Thus the release element 42 is rotated about its axis A-A (in the anticlockwise direction with respect to Figure 1), causing its axial projection 44 to move in such a way that it comes into contact with the first arm 36 and consequently moves the locking rocker 32. This movement coincides with the disengagement of the first arm 36 from the lower catch 30 of the sliding member 18. The resilient return member 24 is therefore free to push the lever 22, thus moving the sliding member 18 and the shutter 16 jointly into their closing position and condition respectively. The valve device 10 therefore returns to the configuration shown in Figure 1.

Naturally, the principle of the invention remaining the same, the forms of embodiment and the details of construction may be varied widely with respect to those described and illustrated, which have been given purely by way of non-limiting example, without thereby departing from the scope of the invention as defined in the attached claims.

## Claims

1. Electrically operated valve device (10) comprising:
- a supporting body (12) having a valve seat;
- a shutter (16) which can be moved in a guided way between a first valve seat opening position and a second valve seat closing position;
- a sliding member (18) which is mounted movably on the supporting body (12), is fixed mechanically to the shutter (16), and is movable between an opening condition and a closing condition, in which it moves the shutter (16) to the opening and closing position respectively;
- a resilient return member (24) associated kinematically with the sliding member (18) and tending to retain said sliding member (18) in the closing condition;
- first opening actuator means (50) which are associated with the sliding member (18) and which are designed to enter an activated condition, in which they bring the sliding member (18) into the opening condition against the action of the resilient return member (24);
- retaining means (28) mounted on the supporting body (12) and capable of retaining the sliding member (18) when the latter is in the opening condition; and
- second closing actuator means (52) which are associated with the retaining means (28), which can be electrically activated, and which can assume an activated condition in which they release the sliding member (18) from the retaining means (28), allowing said sliding member (18) to return from the opening position to the closing position;
the retaining means (28) comprising:
- a locking element (32) which engages releasably with the sliding member (18) when the latter is in the opening position, as a result of the activation of the opening actuator means (50), thus preventing the return of said sliding member (18) to the closing position; and
- a release element (42) which disengages the locking element (32) from the sliding member (18) when the closing actuator means (52) are in the activated condition, thus allowing said sliding member (18) to return to the closing position; whereby the locking element (32) is rotatable with respect to the supporting body (12) about a first axis of rotation (A-A) and tends to maintain in a resilient way an angular fastening position in which it is capable of being coupled releasably to the sliding member (18).

2. Valve device according to Claim 1, in which the release element (42) is rotatable with respect to the supporting body (12) about a second axis of rotation (A-A) against the action of opposing resilient means (48) and is designed to assume a release position in which it moves the locking element (32), thus disengaging it from the sliding member (18), as a result of the activation of the closing actuator means (52).

3. Valve device according to Claim 2, in which said first and second axes of rotation (A-A) coincide.

4. Valve device according to any one of Claims 1 to 3 , in which the sliding member (18) and the locking element (32) comprise, respectively, a first and a second inclined profile (30a, 36a) shaped in a complementary manner, said first inclined profile (30a) bearing on the second inclined profile (36a) when the sliding member (18) is moved from the closing condition towards the opening condition, and passing over said second inclined profile (36a) when said sliding member (18) is in the opening condition, so as to allow the locking element (32) to be coupled to said sliding member (18).

5. Valve device according to Claims 1 and 4, in which the locking element is a rocker lever (32) comprising a first arm (36) carrying the second inclined profile (36a) and a second arm (38; 40) bearing on the supporting body (12) in such a way that it resiliently opposes the rotation of the first arm (36) of the locking element away from the sliding member (18) with respect to its fastening position.

6. Valve device according to Claim 5 , in which the release element (42) comprises a projection (44) which interacts with the first arm (36), and which, when said release element (42) is in the angular release position, pushes the locking element (32) away from the fastening position, thus disengaging the sliding member (18).

7. Valve device according to any one of the preceding claims, in which a rotatable lever (22) pivoted on the supporting body (12) is interposed between the movable sliding member (18) and the resilient return member (24), this lever being connected to said sliding member (18) and being acted on by said resilient return member (24).

8. Valve device according to Claim 7, in which the first opening actuator means (50) can move the rotatable lever (22) against the action of the resilient return member (24).

9. Valve device according to any one of the preceding claims, in which said first actuator means comprise a first conducting shape memory wire (50) which has one of its ends fixed to the supporting body (12) and its other end mechanically secured to the sliding member (18), and which can change from a de-energized elongated condition to an energized contracted condition when an electric current flows through it.

10. Valve device according to any one of the preceding claims, in which the second actuator means comprise a second conducting shape memory wire (52) which has one of its ends fixed to the supporting body (12) and its other end mechanically secured to the retaining means (28), and which can change from a de-energized elongated condition to an energized contracted condition when an electric current flows through it.

## Patentansprüche

1. Elektrisch zu betätigende Ventileinrichtung (10), mit:
- einem Tragkörper (12) mit einem Ventilsitz;
- einem Verschluss (16), der auf eine geführte Art und Weise zwischen einer ersten Ventilsitz-öffnungsposition und einer zweiten Ventilsitzschließposition bewegt werden kann:
- einem Gleitelement (18), das auf dem Tragkörper (12) beweglich montiert ist, an dem Verschluss (16) mechanisch befestigt ist und zwischen einem Öffnungszustand und einem Schließzustand beweglich ist, bei dem es den Verschluss (16) in die Öffnungs- bzw. Schließposition bewegt;
- einem elastischen Rücklaufelement (24), das dem Gleitelement (18) kinematisch zugeordnet ist und das dazu neigt, das Gleitelement (18) in dem Schließzustand zu halten;
- ersten Öffnungsbetätigungsmitteln (50), die dem Gleitelement (18) zugeordnet sind und die derart entworfen sind, dass sie einen aktivierten Zustand aufnehmen, bei der sie das Gleitelement (18) gegen die Aktivität des elastischen Rücklaufelements (24) in den Öffnungszustand bringen;
- Haltemittel (28), die an dem Tragkörper (12) montiert sind und die geeignet sind zum Halten des Gleitelements (18), wenn das letztere sich in dem Öffnungszustand befindet; und
- zweite Schließbetätigungsmittel (52), die den Haltemitteln (28) zugeordnet sind, die elektrisch betätigt werden können und die einen aktivierten Zustand annehmen können, bei dem sie das Gleitelement (18) von den Haltemitteln (28) lösen, wobei es dem Gleitelement (18) ermöglicht wird, aus der Öffnungsposition in die Schließposition zurückzukehren;
wobei die Haltemittel (28) aufweisen:
- ein Verschlusselement (32), das lösbar mit dem Gleitelement (18) in Eingriff ist, wenn sich das letztere in der Öffnungsposition befindet, als Ergebnis der Aktivierung der Öffnungsbetätigungsmittel (50), was folglich das Zurückkehren des Gleitelements (18) in die Schließposition verhindert; und
- ein Löseelement (42), das das Verschlusselement (32) von dem Gleitelement (18) löst, wenn sich die Schließbetätigungsmittel (52) in dem aktivierten Zustand befinden, das es folglich dem Gleitelement (18) ermöglicht, in die Schließposition zurückzukehren;
wonach das Verschlusselement (32) mit Bezug auf den Tragkörper (12) um eine erste Drehachse (A-A) drehbar ist und dazu neigt, eine winklige Befestigungsposition, bei der es imstande ist, lösbar mit dem Gleitelement (18) gekoppelt zu werden, auf eine elastische Art und Weise aufrecht zu erhalten.

2. Ventileinrichtung nach Anspruch 1, bei der das Löseelement (42) mit Bezug auf den Tragkörper (12) um eine zweite Drehachse (A-A) herum gegen die Aktivität eines entgegenwirkenden elastischen Mittels (48) drehbar ist und derart entworfen ist, dass es eine Löseposition annimmt, bei der es das Verschlusselement (32) bewegt, es folglich von dem Gleitelement (18) löst, als Ergebnis der Aktivierung der Schließbetätigungsmittel (52).

3. Ventileinrichtung nach Anspruch 2, bei der sich die erste und die zweite Drehachse (A-A) überdecken.

4. Ventileinrichtung nach einem der Ansprüche 1 bis 3, bei der das Gleitelement (18) und das Verschlusselement (32) ein erstes bzw. ein zweites schräges Profil (30a, 36a) aufweisen, die in einer entgegengesetzten Art und Weise geformt sind, wobei das erste schräge Profil (30a) auf dem zweiten schrägen Profil (36a) gelagert ist, wenn sich das Gleitelement (18) von dem Schließzustand in den Öffnungszustand bewegt, und über das zweite geneigte Profil (36a) hinausläuft, wenn das Gleitelement (18) sich in dem Öffnungszustand befindet, so dass es dem Verschlusselement (32) ermöglicht wird, mit dem Gleitelement (18) gekoppelt zu werden.

5. Ventileinrichtung nach Anspruch 1 und 4, bei dem das Verschlusselement ein Kipphebel (32) ist, der einen ersten Arm (36), der das zweite geneigte Profil (36a) trägt, und einen zweiten Arm (38; 40) aufweist, der auf dem Tragkörper (12) auf solch eine Art und Weise gelagert ist, dass er sich der Drehung des ersten Arms (36) des Verschlusselements weg von dem Gleitelement (18) mit Bezug auf seine Befestigungsposition elastisch widersetzt.

6. Ventileinrichtung nach Anspruch 5, bei der das Löseelement (42) einen Vorsprung (44) aufweist, der mit dem ersten Arm (36) interagiert und der, wenn sich das Löseelement (42) in der winkligen Löseposition befindet, das Verschlusselement (32) von der Befestigungsposition wegdrückt, und so das Gleitelement (18) löst.

7. Ventileinrichtung nach einem der vorhergehenden Ansprüche, bei der ein drehbarer Hebel (22), der auf dem Tragkörper (12) schwenkt, zwischen dem beweglichen Gleitelement (18) und dem elastischen Rücklaufelement (24) angeordnet ist, wobei dieser Hebel mit dem Gleitelement (18) verbunden ist und von dem elastischen Rücklaufelement (24) betätigt wird.

8. Ventileinrichtung nach Anspruch 7, bei der die ersten Öffnungsbetätigungsmittel (50) den drehbaren Hebel (22) gegen die Kraft des elastischen Rücklaufelements (24) bewegen können.

9. Ventileinrichtung nach einem der vorhergehenden Ansprüche, bei der die ersten Betätigungsmittel einen ersten leitenden Formgedächtnisdraht (50) aufweisen, dessen eines Ende an dem Tragkörper (12) befestigt ist und dessen anderes Ende an dem Gleitelement (18) mechanisch gesichert ist und der von einem abgeschalteten langgestreckten Zustand zu einem mit Energie beaufschlagten zusammengezogenen Zustand wechseln kann, wenn ein elektrischer Strom durch ihn hindurchfließt.

10. Ventileinrichtung nach einem der vorhergehenden Ansprüche, bei der die zweiten Betätigungsmittel einen zweiten leitenden Formgedächtnisdraht (52) aufweisen, dessen eines Ende an dem Tragkörper (12) befestigt ist und dessen anderes Ende an den Haltemitteln (28) mechanisch gesichert ist und der von einem abgeschalteten langgestreckten Zustand zu einem mit Energie beaufschlagten zusammengezogenen Zustand wechseln kann, wenn eine elektrische Energie durch ihn hindurchfließt.

## Revendications

1. Dispositif à soupape à commande électrique (10) comprenant :
- un corps de support (12) possédant un siège de soupape ;
- un obturateur (16) qui peut être déplacé de manière guidée entre une première position d'ouverture de siège de soupape et une seconde position de fermeture de siège de soupape ;
- un organe coulissant (18) qui est monté de façon mobile sur le corps de support (12), est fixé mécaniquement à l'obturateur (16), et est mobile entre une condition d'ouverture et une condition de fermeture, dans lesquelles il déplace l'obturateur (16) vers les positions d'ouverture et de fermeture, respectivement ;
- un organe de rappel résilient (24) associé cinématiquement avec l'organe coulissant (18) et ayant tendance à retenir ledit organe coulissant (18) dans la condition de fermeture ;
- des premiers moyens actionneurs d'ouverture (50) qui sont associés à l'organe coulissant (18) et qui sont conçus pour entrer dans une condition activée, dans laquelle ils mettent l'organe coulissant (18) dans la condition d'ouverture contre l'action de l'organe de rappel résilient (24) ;
- des moyens de retenue (28) montés sur le corps de support (12) et capables de retenir l'organe coulissant (18) lorsque ce dernier est dans la condition d'ouverture ; et
- des seconds moyens actionneurs de fermeture (52) qui sont associés aux moyens de retenue (28), qui peuvent être électriquement activés, et qui peuvent adopter une condition activée dans laquelle ils libèrent l'organe coulissant (18) des moyens de retenue (28), permettant audit organe coulissant (18) de retourner de la position d'ouverture à la position de fermeture ;
les moyens de retenue (28) comprenant :
- un élément de verrouillage (32) qui entre en prise de façon libérable avec l'organe coulissant (18) lorsque ce dernier est dans la position d'ouverture, en conséquence de l'activation des moyens actionneurs d'ouverture (50), ainsi empêchant le retour dudit organe coulissant (18) à la position de fermeture ; et
- un élément de libération (42) qui met l'élément de verrouillage (32) hors de prise de l'organe coulissant (18) lorsque les moyens actionneurs de fermeture (52) sont dans la condition activée, ainsi permettant audit organe coulissant (18) de retourner à la position de fermeture ;
moyennant quoi l'élément de verrouillage (32) est rotatif par rapport au corps de support (12) autour d'un premier axe de rotation (A-A) et a tendance à maintenir de manière résiliente une position de fixation angulaire dans laquelle il est capable d'être accouplé de façon libérable à l'organe coulissant (18).

2. Dispositif à soupape selon la revendication 1, dans lequel l'élément de libération (42) est rotatif par rapport au corps de support (12) autour d'un second axe de rotation (A-A) contre l'action de moyens résilients opposés (48) et est conçu pour adopter une position de libération dans laquelle il déplace l'élément de verrouillage (32), ainsi le mettant hors de prise de l'organe coulissant (18), en conséquence de l'activation des moyens actionneurs de fermeture (52).

3. Dispositif à soupape selon la revendication 2, dans lequel lesdits premier et second axes de rotation (A-A) coïncident.

4. Dispositif à soupape selon l'une quelconque des revendications 1 à 3 , dans lequel l'organe coulissant (18) et l'élément de verrouillage (32) comprennent, respectivement, des premier et second profils inclinés (30a, 36a) formés de manière complémentaire, ledit premier profil incliné (30a) prenant appui sur le second profil incliné (36a) lorsque l'organe coulissant (18) est déplacé à partir de la condition de fermeture vers la condition d'ouverture, et passant par-dessus ledit second profil incliné (36a) lorsque ledit organe coulissant (18) est dans la condition d'ouverture, afin de permettre à l'élément de verrouillage (32) d'être accouplé audit organe coulissant (18).

5. Dispositif à soupape selon les revendications 1 et 4, dans lequel l'élément de verrouillage est un levier culbuteur (32) comprenant un premier bras (36) supportant le second profil incliné (36a) et un second bras (38 ; 40) prenant appui sur le corps de support (12) de manière telle qu'il s'oppose de façon résiliente à la rotation du premier bras (36) de l'élément de verrouillage pour s'éloigner de l'organe coulissant (18) par rapport à sa position de fixation.

6. Dispositif à soupape selon la revendication 5, dans lequel l'élément de libération (42) comprend une saillie (44) qui interagit avec le premier bras (36), et qui, lorsque ledit élément de libération (42) est dans la position de libération angulaire, pousse l'élément de verrouillage (32) pour l'éloigner de la position de fixation, ainsi mettant l'organe coulissant (18) hors de prise.

7. Dispositif à soupape selon l'une quelconque des revendications précédentes, dans lequel un levier rotatif (22) pivotant sur le corps de support (12) est interposé entre l'organe coulissant mobile (18) et l'organe de rappel résilient (24), ce levier étant raccordé audit organe coulissant (18) et ledit organe de rappel résilient (24) agissant sur ledit levier.

8. Dispositif à soupape selon la revendication 7, dans lequel les premiers moyens actionneurs d'ouverture (50) peuvent déplacer le levier rotatif (22) contre l'action de l'organe de rappel résilient (24).

9. Dispositif à soupape selon l'une quelconque des revendications précédentes, dans lequel lesdits premiers moyens actionneurs comprennent un premier fil conducteur à mémoire de forme (50) qui a l'une de ses extrémités fixée au corps de support (12) et son autre extrémité mécaniquement fixée à l'organe coulissant (18), et qui peut changer d'une condition allongée mise hors tension à une condition contractée mise sous tension lorsqu'un courant électrique passe à travers lui.

10. Dispositif à soupape selon l'une quelconque des revendications précédentes, dans lequel les seconds moyens actionneurs comprennent un second fil conducteur à mémoire de forme (52) qui a l'une de ses extrémités fixée au corps de support (12) et son autre extrémité mécaniquement fixée aux moyens de retenue (28), et qui peut changer d'une condition allongée mise hors tension à une condition contractée mise sous tension lorsqu'un courant électrique passe à travers lui.
